# EUROPEAN PATENT SPECIFICATION

(11) **EP 0 339 663 B1**
(45) Date of publication and mention of the grant of the patent: **22.11.1995**
(21) Application number: 89107722.4
(22) Date of filing: 28.04.1989
(51) Int. Cl.: F16H 3/66

(54) **Automatic four-speed transmission**
Automatisches Vierganggetriebe
Transmission automatique à quatre vitesses

(30) Priority: 29.04.1988 US 187751
(43) Date of publication of application: 02.11.1989
(73) Proprietor: CHRYSLER CORPORATION, Highland Park Michigan 48203 (US)
(72) Inventor: Leising, Maurice B., Clawson, MI 48017 (US); Nogle, Thomas D., Troy, MI 48084 (US); Benford, Howard L., Bloomfield Hills, MI 48013 (US); Holbrook, Gerald L., Rochester Hills, MI 48063 (US); Klotz, James R., Mt. Clemens, MI 48043 (US); Martin, Berthold, Utica, MI 48087 (US); Mikel, Steven A., Farmington Hills, MI 48018 (US); Nortman, William, Grosse Pointe, MI 48230 (US)
(74) Representative: Wehnert, Werner, Dipl.-Ing. Patentanwälte Hauck, Graalfs, Wehnert, Döring, Siemons

(56) References cited:
- FR-A- 2 283 364
- FR-A- 2 440 496
- GB-A- 2 049 074
- GB-A- 2 066 391
- US-A- 2 546 378
- US-A- 4 086 827
- US-A- 4 607 541

## Description

### 1. Field Of The Invention

The present invention relates to an automatic transmission assembly according to the preamble of claim 1. The assembly is primarily intended for motor vehicle use, and more particularly, to a four-speed automatic transmission that is controlled electronically and hydraulically.

### 2. Description Of Related Art

Generally speaking, land vehicles require three basic components. These components comprise a power plant (such as an internal combustion engine) a power train and wheels. The internal combustion engine produces force by the conversion of the chemical energy in a liquid fuel into the mechanical energy of motion (kinetic energy). The function of the power train is to transmit this resultant force to the wheels to provide movement of the vehicle.

The power train's main component is typically referred to as the "transmission". Engine torque and speed are converted in the transmission in accordance with the tractive-power demand of the vehicle. The vehicle's transmission is also capable of controlling the direction of rotation being applied to the wheels, so that the vehicle. may be driven both forward and backward.

A conventional transmission includes a hydrodynamic torque converter to transfer engine torque from the engine crankshaft to a rotatable input member of the transmission through fluid-flow forces. The transmission also includes frictional units which couple the rotating input member to one or more members of a planetary gearset. Other frictional units, typically referred to as brakes, hold members of the planetary gearset stationary during flow of power. These frictional units are usually brake clutch assemblies or band brakes. The drive clutch assemblies can couple the rotating input member of the transmission to the desired elements of the planetary gearsets, while the brakes hold elements of these gearsets stationary. Such transmission systems also typically provide for one or more planetary gearsets in order to provide various ratios of torque and to ensure that the available torque and the respective tractive power demand are matched to each other.

Transmissions are generally referred to as manually actuated or automatic transmissions. Manual transmissions generally include mechanical mechanisms for coupling rotating gears to produce different ratio outputs to the drive wheels.

Automatic transmissions are designed to take automatic control of the frictional units, gear ratio selection and gear shifting. A thorough description of general automatic transmission design principals may be found in "Fundamentals of Automatic Transmissions and Transaxles," Chrysler Corporation Training Manual No. TM-508A. Additional descriptions of automatic transmissions may be found in U.S. Patent No. US-A-3,631,744, entitled "Hydromatic Transmission," issued January 4, 1972 to Blomquist, et al., and U.S. Patent US-A-4,289,048, entitled. "Lock-up System for Torque Converter," issued on September 15, 1981 to Mikel, et al.

In general, the major components featured in such an automatic transmission are: a torque converter as above-mentioned; fluid pressure-operated multi-plate drive or brake clutches and/or brake bands which are connected to the individual elements of the planetary gearsets in order to perform gear shifts without interrupting the tractive power; one-way clutches in conjunction with the frictional units for optimization of power shifts; and transmission controls such as valves for applying and releasing elements to shift the gears (instant of shifting), for enabling power shifting, and for choosing the proper gear (shift point control), dependent on-shift program selection by the driver (selector lever), accelerator position, the engine condition and vehicle speed.

The control system of the automatic transmission is typically hydraulically operated through the use of several valves to direct and regulate the supply of pressure. This hydraulic pressure control will cause either the actuation or deactuation of the respective frictional units for effecting gear changes in the transmission. The valves used in the hydraulic control circuit typically comprise spring-biased spool valves, spring-biased accumulators and ball check valves. Since many of these valves rely upon springs to provide a predetermined amount of force, it will be appreciated that each transmission design represents a finely tuned arrangement of interdependent valve components. While this type of transmission control system has worked well over the years, it does have its limitations. For example, such hydraulically controlled transmissions are generally limited to one or a very small number of engines and vehicle designs. Therefore, considerable cost is incurred by an automobile manufacturer to design, test, build, inventory and repair several different transmission units in order to provide an acceptable broad model line for consumers.

Additionally, it should be appreciated that such hydraulically controlled transmission systems cannot readily adjust themselves in the field to compensate for varying conditions such as normal wear on the components, temperature swings and changes in engine performance over time. While each transmission is designed to operate most efficiently within certain specific tolerances, typical hydraulic control systems are incapable of taking self corrective action on their own to maintain operation of the transmission at peak efficiency.

However, in recent years, a more advanced form of transmission control system has been proposed, which would offer the possibility of enabling the transmission to adapt itself to changing conditions. In this regard, U.S. Patent US-A-3,956,947, issued on May 18, 1976 to Leising, et al., sets forth a fundamental development in this field. Specifically, this patent discloses an automatic transmission design which features an "adaptive" control system that includes electrically operated solenoid-actuated valves for controlling certain fluid pressures. In accordance with this electric/hydraulic control system, the automatic transmission would be "responsive" to an acceleration factor for controlling the output torque of the transmission during a shift from one ratio of rotation (between the input and output shafts of the transmission) to another. Specifically, the operation of the solenoid-actuated valves would cause a rotational speed versus time curve of a sensed rotational component of the transmission to substantially follow along a predetermined path during shifting.

FR-A- 2,283,364 discloses a vehicle automatic transmission assembly typically comprising three clutches, two brakes and a one-way clutch or brake which is designed to be a free-wheel device to prevent the annulus gear of the first planetary gear set from rotating backward relative to the rotation of the input member, but allowing the annulus gear to rotate freely in the forward direction when the first brake is released. Accordingly, the prior art devices normally require quite a few certain elements to provide acceptable shift quality. The reference does not disclose any actuating means for applying and disengaging the clutch assemblies.

GB-A-2 049 074 discloses four clutch assemblies, i.e. three clutch assemblies engageable in pairs and cooperating with the first brake to achieve four forward-speed ratios, and a fourth (reverse) clutch engageable with a second brake to achieve a reverse drive ratio. The known transmission further requires a first one-way clutch disposed in series drive relation with a first clutch assembly, and a second one-way clutch disposed in series drive relation with a further clutch assembly.

### 3. Objects Of The Present Invention

It is one object of the present invention to provide a four-speed automatic transmission design which can be readily utilized in conjunction with a variety of engines and vehicle sizes and types, including vehicles presently using conventional, mechanical-hydraulic automatic transmission systems.

It is an additional object of the present invention to eliminate the need for a few certain elements (clutches, bands, one-way clutches) which are normally required to provide acceptable shift quality.

It is a more specific object of the present invention to provide a unique clutch and gear-arrangement which, relative to today's three-speed units, eliminates the need for additional gears of the gear assembly and one over-running (one-way) clutch, while requiring only one more friction element to increase the compactness and decrease the axial length of the transmission. Since the clutch and gear arrangement of the present invention eliminates the need for the low gear over-running clutch, the gearset pinions are not forced to spin at high speed when the vehicle is towed backwards. This reduces the need for lubrication and permits substantially unrestricted rearward or forward towing.

This application is one of several applications filed on the same date, all commonly assigned and having similar Specification and Drawings, these applications being identified below.
EP-A-0339665 DIRECT-ACTING, NON-CLOSE CLEARANCE SOLENOID-ACTUATED VALVES
EP-A-0339664 METHOD OF OPERATING AN ELECTRONIC AUTOMATIC TRANSMISSION SYSTEM
EP-A-0339662 METHOD OF LEARNING FOR ADAPTIVELY CONTROLLING AN ELECTRONIC AUTOMATIC TRANSMISSION SYSTEM

### Summary Of The Invention

To achieve the foregoing objects, the present invention provides a vehicle transmission assembly according to the features of claim 1. While this transmission system particularly features a fully adaptive electronic control system, numerous other important advances are incorporated into this unique transmission system, as will be described below in detail.

In addition to the advantages offered by the adaptive control system, the present invention achieves the combination of this control system with a unique four-speed transaxle structure which requires fewer components and is smaller than previous four-speed transmission systems. For example, the four-speed transmission system according to the present invention is capable of fitting into the space made available for a conventional three-speed transmission system.

Additionally, the four-speed transmission system features a simplified clutch and gear arrangement, which does not require over-running clutches.

Other objects, features and advantages of the present invention will become more fully apparent from the following detailed description of the preferred embodiment, the appended claims and in the accompanying drawings in which:

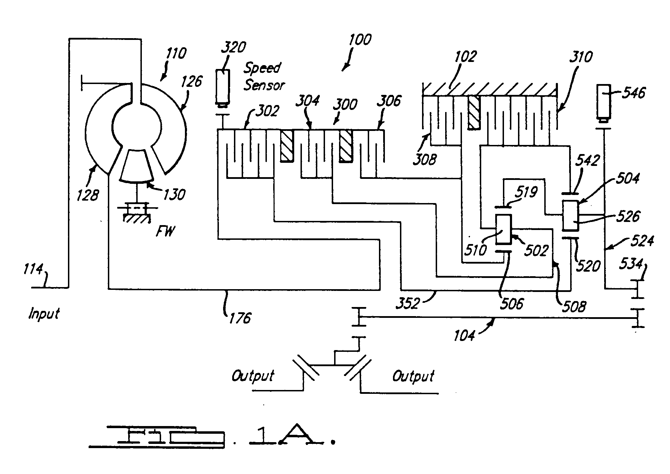

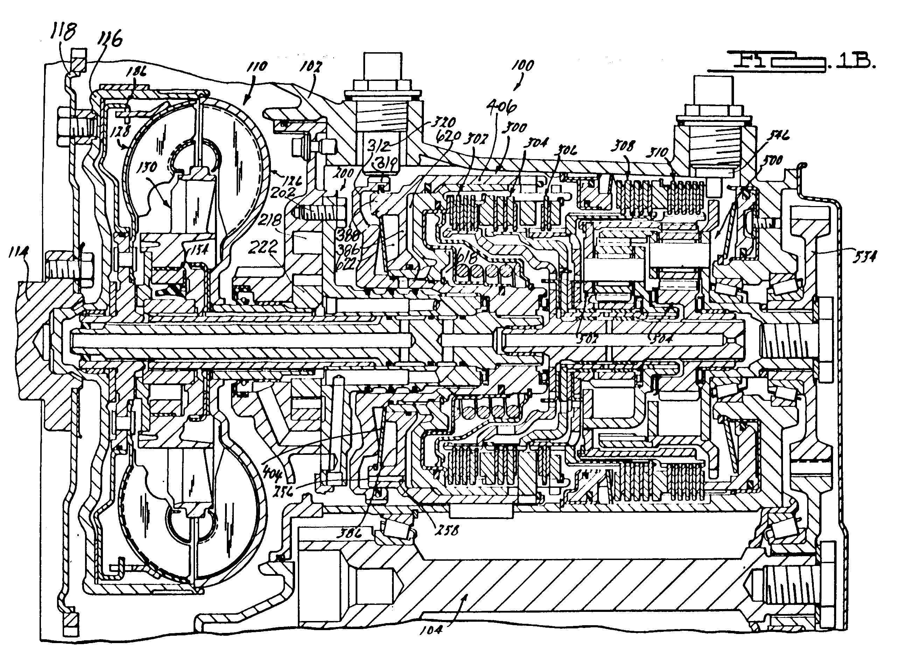

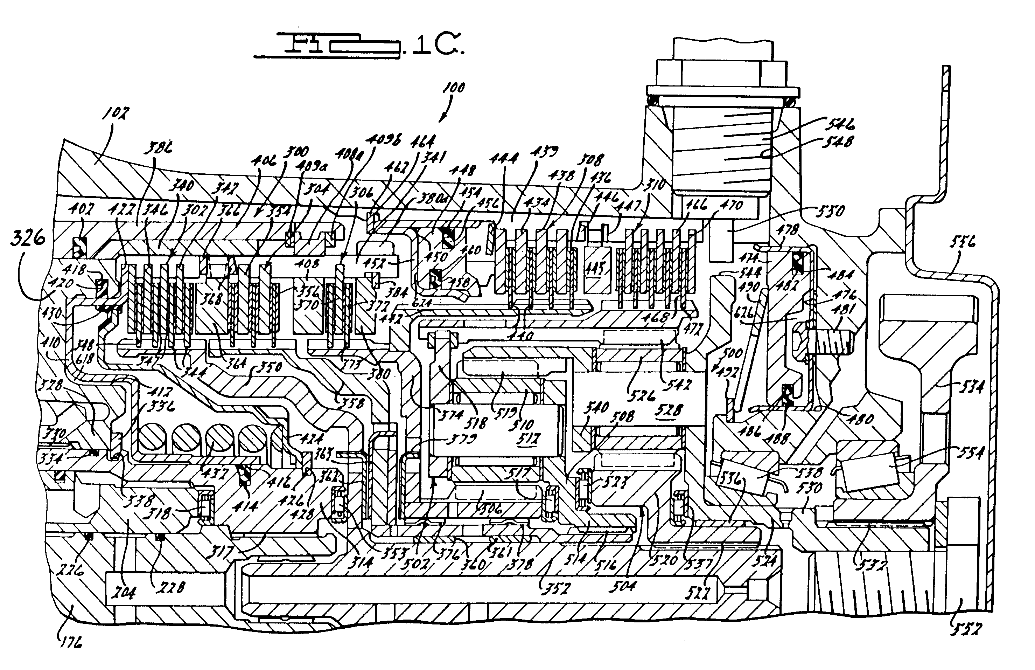

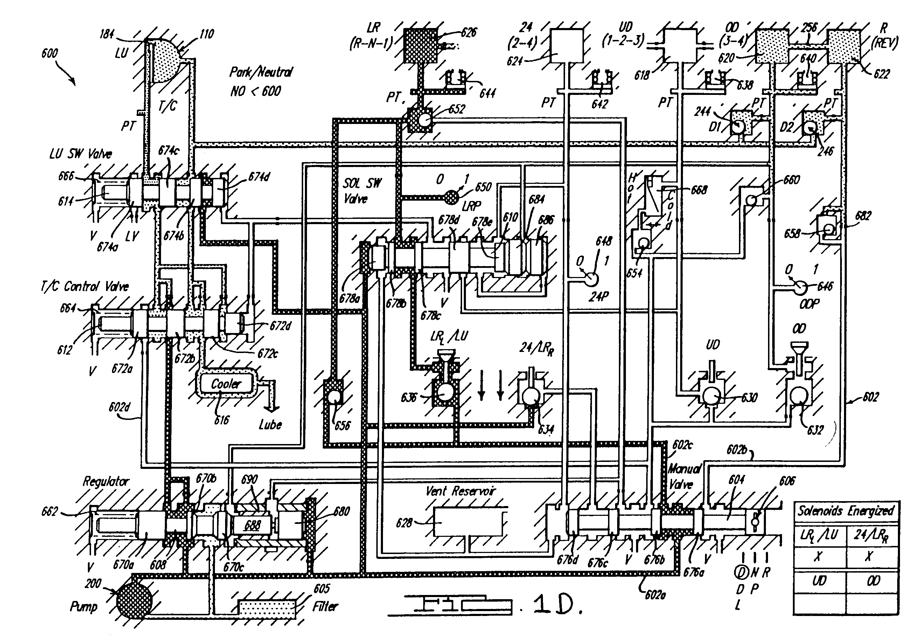

Figures 1A-C illustrate one physical embodiment of the transmission according to the present invention; Figure 1A is a schematic diagram of the transmission; Figure 1B is a sectional elevational view of one embodiment of a transmission constructed according to the present invention; Figure 1C is a partial sectional elevational view of the one half of the transmission of Figure 1B; and Figure 1D is a diagram of the hydraulic system.

### TORQUE CONVERTER ASSEMBLY STRUCTURE

As Fig. 1A shows the torque converter assembly 110 is operative to transmit power from a rotating crankshaft 114 of a prime mover such as an automobile engine (not shown) to the input member of the transmission 100. This power may then be subsequently transmitted to a drive unit 104 (partially shown) which is connected to one or more drive wheels (not shown) of the vehicle. The torque converter 110 is generally comprised of an impeller assembly 126, turbine assembly 128 and a stator assembly 130.

As illustrated in Figure 1B, power is transmitted from the rotating crankshaft 114 of the engine to a front cover member 116 of the impeller assembly 126 through a rotatable plate member 118.

The impeller assembly 126 is fluidly connected in toroidal flow relationship in a known manner with the turbine assembly 128 and the stator assembly 130. The stator plate is mounted on a one-way or over-running clutch assembly, generally indicated at 154. The over-running clutch assembly 154 permits rotation only in the direction of the impeller assembly 126.

The torque converter 110 also includes a lock-up clutch assembly, generally indicated at 186, to prevent slip between the rotating crankshaft 114 of the engine and the turbine assembly 128 of the torque converter 110.

The fixed positive displacement pump assembly 200 includes a pump housing 202. An outer gear or rotor 218 with internal teeth (not shown) operates within a bore of the pump housing 202. An inner gear or rotor 222 having external teeth (not shown), cooperative with the teeth of the outer rotor 218, is disposed within the outer rotor 218.

### MULTI-CLUTCH ASSEMBLY STRUCTURE

During the flow of power through the transmission 100, the multi-clutch assembly 300 provides a means for application and release of two separate members to and from each other. In other words, the multi-clutch assembly 300 is the means by which the gears within the transmission are selectively engaged and disengaged from either the crankshaft 114 of the prime mover or the transmission case 102. Near the input side of the transmission 100, the multi-clutch assembly 300 includes an underdrive clutch 302 (applied in first, second and third gears), overdrive clutch 304 (applied in third and fourth gears) and a reverse clutch 306 (applied in reverse gear) assemblies. Near the output side of the transmission 100, the multi-clutch assembly 300 includes a two/four shift clutch assembly 308 (applied in second and fourth gears), and a low/reverse clutch assembly 310 (applied in first and reverse gears).

As illustrated in Figure 1B, an input clutch retainer hub 312 is provided to house the clutch assemblies 302, 304 and 306. The input clutch retainer hub 312 has teeth 319 at its outer periphery. A turbine speed sensor 320 has one end disposed or spaced radically just above the teeth 319 of the input clutch retainer hub 312. The turbine speed sensor 320 is used to monitor or sense the revolution rate of the turbine assembly 128 by counting the teeth 319 passing thereby in relation to time. Preferably, a passive type speed sensor is used for the turbine speed sensor 320. However, it should he appreciated that other suitable speed sensors could be employed within or before the transmission 100 to provide an input speed signal for a transmission controller.

As illustrated in Figure 1C, the underdrive clutch assembly 302 comprises a plurality of axially spaced annular clutch plans 342 and a plurality of axially spaced annular clutch discs 344. The clutch discs 344 are alternated between the clutch plans 342 and when the clutch assembly 302 is not applied, these plates and discs are free to move or rotate relative to each other. The clutch plates 342 have splines (not shown) on their outer diameter and mount in grooves 346 of clutch retainer fingers 341 which are inside input clutch retainer 326. The clutch discs 344 have internal splines (not shown) and are lined with a friction material 347. The clutch discs 344 are mounted in grooves 348 in an underdrive clutch hub 350. The underdrive clutch hub 350 is integral with a rotatable underdrive gear shaft 352 of the gear assembly 500. A thrust bearing 353 is disposed axially between the axially extending portion 314 of the input clutch retainer hub 312 and underdrive clutch hub 350.

The overdrive clutch assembly 304 comprises a plurality of axially spaced annular clutch plates 354 and a plurality of axially spaced annular clutch discs 356. The clutch plates 354 and clutch discs 356 are similar to those of the underdrive clutch assembly 302. Clutch discs 356 are disposed in splines formed in an overdrive clutch hub 358 which is supported by busings 360 and 361 about the gear shaft 352. Thrust members 362 and 363 are disposed axially between the underdrive clutch hub 350 and overdrive clutch hub 358. The thrust members 362 and 363 are similar to thrust member within the torque converter. An annular reaction plate 364 is secured to the inside of the input clutch retainer 326 axially between the underdrive and overdrive clutch plates and discs 342, 344 354 and 356, respectively. The reaction plate 364 is shared by the underdrive 302 and overdrive 304 clutch assemblies. Annular snap rings 366 and 368 are disposed on the sides of the reaction plate 364. Snap ring 368 is a tapered ring, restraining reaction plate 364 from axial movement.

The reverse clutch assembly 306 comprises at least one annular clutch plate 370 and a plurality of axially spaced annular clutch discs 372. The reverse clutch plate 370 and clutch discs 372 are similar to those of the underdrive clutch assembly 302. The reverse clutch discs 372 are mounted in splines 373 of a reverse clutch hub 374. The reverse clutch hub 374 is supported by bushings 376 and 378 about one end of the overdrive clutch hub 358. A thrust member 379 is disposed axially between the overdrive clutch hub 358 and reverse clutch hub 379. The thrust member 379 is similar to the thrust member within the torque converter. An annular reaction plate 380 is mounted about one end of the flange 340 of the input clutch retainer 326 on one side of the reverse clutch plate 370 and discs 372. Selective snap rings 384 secure the reaction plate 380 from axial movement along the input clutch retainer 326.

To apply the overdrive clutch assembly 304 and reverse clutch assembly 306, a fluid actuating device such as a first hydraulic piston 386 has an axially extending projection 388 which operates in a bore or recess of the input clutch retainer hub 312.

The first hydraulic piston 386 includes an axially extending cylinder portion 406 which has an annular pressure plate member 408 secured at one end thereof by waved snap ring 409a and snap ring 409b. The pressure plate member 408 is interposed between the overdrive clutch assembly 304 and the reverse clutch assembly 306 to engage the clutch plates 354, 370 and discs 356, 372, respectively. Hence, the single pressure plate member 408 is shared by the overdrive clutch 304 and reverse clutch 306 assemblies.

To engage or disengage the underdrive clutch assembly 302, a second hydraulic piston 410 operates in a recess 412 of the input clutch retainer 326. The smooth outer diameter of the hub portion 314 of the input clutch retainer hub 312 has a groove 414 provided with a sealing means such as a synthetic rubber inner seal ring 416, while the outer periphery of recess 412 has a groove 418 for an outer seal ring 420. The second hydraulic piston 410 has one end 422 abutting the clutch plates 342 of the underdrive clutch assembly 302. An annular conically shaped spring retainer member 424 is abuttingly mounted against a snap ring 426. The snap ring 426 is disposed in a groove 428 formed in the axially extending portion 314 of the input clutch retainer hub 312. The other end of the spring retainer member 424 is in sealing engagement with the second hydraulic piston 410 through sealing means 430. The spring retainer member 424 is filled with fluid fed through an orifice (not shown) in the second hydraulic piston 410 from a passage (not shown) in the input clutch retainer hub 312 to provide the pressure balance for the second hydraulic piston 410. The excess fluid is allowed to leak past the snap ring 426 to cool the underdrive clutch assembly 302. A spring means such as a coiled spring 432 is disposed between the spring retainer member 424 and the second hydraulic piston 410 to bias or return the second hydraulic piston 410 to its original position shown the figure when not applied.

At the output end of the transmission 100, the transmission case 102 houses the output or brake clutch assemblies such as the two/four shift clutch assembly 308 and the low/reverse clutch assembly 310. The two/four shift clutch assembly 308 comprises a plurality of axially spaced annular clutch plates 434 and a plurality of axially spaced annular clutch discs 436. The clutch plates 434 and clutch discs 436 are similar to those of the underdrive clutch assembly 302. The clutch plates 434 are mounted in splines 438 of circumferentially spaced and radially inwardly extending case clutch fingers 439 inside the transmission case 102. The clutch discs 436 are mounted in splines 440 formed in an axially extending flange 442 of the reverse clutch hub 374. A spring means such as a Belleville like spring 444, similar to spring 404, is mounted inside the transmission case 102 on one side of the two/four shift clutch assembly 308. An annular reaction plate 445 is mounted on the other side of the two/four shift clutch assembly 308 and between the two/four shift clutch assembly 308 and the low/reverse clutch assembly 310. The reaction plate 445 is shared by the two/four shift clutch 308 and low/reverse clutch 310 assemblies. Snap rings 446 and 447 are mounted in the transmission case 102 on the sides of the reaction plate 445 to lock it in place. Snap ring 446 is a tapered ring, restraining reaction plate 445 from axial movement.

To apply the two/four shift clutch assembly 308, a third hydraulic piston 448 operates in a cavity 450 formed by an annular piston housing 452. The piston housing 452 is secured to the transmission case 102 by suitable fastening means (not shown). The smooth diameter of the third hydraulic piston 448 has a groove 454 formed in its outer periphery for an outer seal ring 456 and a groove 458 formed in its inner periphery for an inner seal ring 460. A snap ring 462 is disposed in a groove 464 in the transmission case 102 to prevent axial movement of the piston housing 452.

The low/reverse clutch assembly 310 comprises a plurality of axially spaced annular clutch plates 466 and a plurality of axially spaced annular clutch discs 468. The clutch plates 466 and clutch discs 468 are similar to those of the underdrive clutch assembly 302. The clutch plates 466 are mounted in splines 470 of the case clutch fingers 439 inside the transmission case 102. The clutch discs 468 are mounted in splines 472 of the outer periphery of an annulus 542 of the gear assembly 500 to described further herein.

To apply the low/reverse clutch assembly 310, a fourth hydraulic piston 474 operates in a cavity 476 formed by an annular piston housing 478. The piston housing 478 is disposed in an annular recess 480 of the transmission case 102 and secured by suitable fastening means, such as bolts 481, to the transmission case 102. The smooth diameter of the fourth hydraulic piston 474 has a groove 482 formed in its outer periphery for an outer seal ring 484 and a grove 486 formed in its inner periphery for an inner seal ring 488. A spring means such as a Belleville like spring 490, similar to spring 404, is disposed between the fourth hydraulic piston 474 and the gear assembly 500 to bias or return the fourth hydraulic piston 474 to its original position when not applied as shown in the figure. A snap ring 492 retains one end of the spring 490 to the transmission case 102.

### GEAR ASSEMBLY STRUCTURE

During the flow of power, a gear assembly changes the ratio of torque between an input member, such as input shaft 176, and an output member, such as output gear 534 which will be further described herein. The gear assembly comprises a front or first planetary gear set, generally indicated at 502, and an axially spaced rear or second planetary gear set, generally indicated at 504. The first planetary gear set 502 includes a first sun gear 506 at its center. The first sun gear 506 is connected to the reverse clutch hub 374 at its inner periphery and is supported upon busings 376 and 378. A first planet carrier 508 is disposed about the first sun gear 506. The first planet carrier 508 includes a plurality of circumferentially spaced first pinion gears 510 mounted about shafts 512 connected to the first planet carrier 508. The first planet carrier 508 includes an inner portion 514 splined at 516 to the overdrive clutch hub 358. A thrust bearing 517 is disposed axially between one and of the first sun gear 506 and inner portion 514 of the first planet carrier 508. The first planet carrier 508 also includes an axially extending outer portion 518 forming a cylinder about the first planetary gear set 502. A first annulus gear 519 is disposed about the first planet carrier 508 and engages the first pinion gears 510.

The rear or second planetary gear set 504 includes a second sun gear 520 at its center which is splined at 522 to the gear shaft 352. A thrust bearing 523 is axially disposed between one end of the inner portion 514 of the first planet carrier 508 and the second sun gear 520. A second planet carrier 524 is disposed about the second sun gear 520. The second planet carrier 524 includes a plurality of circumferentially spaced second pinion gears 526 mounted about shafts 528 connected to the second planet carrier 524. The second planet carrier 524 includes an inner portion 530 splined at 532 to a rotatable output gear 534 which acts as the output member of the transmission 100. The inner portion 530 of the second planet carrier 524 is supported by a bushing 536 disposed about the second sun gear 520. A thrust bearing 537 is disposed axially between the second sun gear 520 and second planet carrier 524. A tapered roller bearing assembly 538 supports the inner portion 530 of the second planet carrier 524 within the transmission case 102.

The second planet carrier 524 also includes an outer portion 540 connected to the first annulus gear 519. The second annulus gear 542 is disposed about the second planet carrier 524 and engages the second pinion gears 526. The second annulus gear 542 is connected to the outer portion 518 of the first planet carrier 508.

The second planet carrier 524 includes teeth 544 at its outer periphery of the outer portion 540. An output speed sensor 546 threadably engages a bore 548 in the transmission case 102 and has one end 550 disposed or radially spaced just above the teeth 544 of the second planet carrier 524. The output speed sensor 546 is used to monitor or sense the revolution rate (per minute) of the second planet carrier 524 by counting or sensing the teeth 544 passing thereby relative to time. The output speed sensor 546 is similar to the turbine speed sensor 320. It should also be noted that other suitable speed sensors could be used inside or after the transmission 100 to provide an output speed signal to the transmission's controller 3010.

The output gear 534 is secured to the second planet carrier 524 by suitable fastens means such as a bolt 552. The output gear 534 is supported by a tapered roller bearing assembly 554 within the transmission case 102. A rear cover plate member 556 is connected by suitable fastening means (not shown) to the rear or output end of the transmission case 102 to enclose the output gear 534 and the transfer gear (not shown).

To visualize and understand how power is transmitted from the rotating crankshaft 114 of the engine to the output gear 534 of the transmission 100, the operation of the assemblies described above will now be discussed in connection with Figures 1C and 1D.

### OPERATION OF THE CLUTCHES

As described previously, the input shaft 176 of the transmission 100 is rotating due to torque being transferred from the rotating crankshaft 114 of the engine and through the torque converter 110 to the input shaft 176. The input clutch retainer hub 312 also rotates with the input shaft 176 due to its spline connection 317 with the input shaft 176. The input clutch retainer 326 and clutch plates 342, 354 and 370 also rotate with the input shaft 176 due to the spline connection 330 of the input clutch retainer 326 to the input clutch retainer hub 312 and spline connection of clutch plates 342, 354 and 370 to the input clutch retainer 326.

To apply the underdrive clutch assembly 308, hydraulic pressure from fluid entering between the input clutch retainer 326 and second hydraulic piston 410 moves the second hydraulic piston 410 axially, thereby compressing the spring 432. The second hydraulic piston 410 forces the rotating clutch plates 342 and momentarily stationary discs 344 of the underdrive clutch assembly 302 together and produces frictional force between the clutch plates 342 and discs 344. Because the input clutch retainer 326 and underdrive clutch plates 342 are rotating, the frictional force causes the underdrive clutch discs 344 and hub 350 to rotate, in turn, rotating gear shaft 352 of the gear assembly 500. When the hydraulic fluid to the underdrive clutch assembly 302 is vented, the compressed spring 432 applies a force to the second hydraulic piston 410, thereby returning the second hydraulic piston 410 to its non-applied position as shown in the figure.

To apply the overdrive clutch assembly 304, hydraulic pressure from fluid entering between the first hydraulic piston 386 and the input clutch retainer 326 moves or pulls the first hydraulic piston 386 axially, thereby deflecting axially the spring 404. The pressure plate member 408 of the first hydraulic piston 386 forces the clutch plates 354 and discs 356 of the overdrive clutch assembly 304 together against the reaction plate 364 and produces a frictional force between them. Because the input clutch retainer 326 and overdrive clutch plates 354 are rotating, the frictional force causes the overdrive clutch discs 356 and overdrive clutch hub 358 to rotate, in turn, rotating the first planet carrier 508 and second annulus gear 542. When the hydraulic fluid to the overdrive clutch assembly 304 or first hydraulic piston 386 is vented, the deflected spring 404 applies a force to the first hydraulic piston 386, thereby returning the first hydraulic piston 386 to its non-applied position as shown in the figure.

To apply the reverse clutch assembly 306, hydraulic pressure from fluid entering between the first hydraulic piston 386 and input clutch retainer hub 312 moves or pushes the first hydraulic piston 386 axially, thereby deflecting the spring 404. The pressure plate member 408 of the first hydraulic piston 386 forces the clutch plate 370 and discs 372 of the reverse clutch assembly 306 together against the reaction plate 380 and produces a frictional force between them. Because the input clutch retainer 326 and reverse clutch plate 370 are rotating, the frictional force causes the reverse clutch discs 372 and reverse clutch hub 374 to rotate, in turn, rotating the first sun gear 506. When the hydraulic fluid to the reverse clutch assembly 306 or first hydraulic piston 386 is vented, the deflected spring 404 applies a force to the first hydraulic piston 386, thereby returning the first hydraulic piston 386 to its non-applied position as shown in the figure.

At the output end of the transmission 100, the two/four shift clutch 308 and low/reverse clutch 310 assemblies are used to hold a particular gear element of the gear assembly 500 against rotation by coupling it to the relatively stationary transmission case 102. To apply the two/four shift clutch assembly 308, hydraulic pressure from fluid entering between the third hydraulic piston housing 452 and the third hydraulic piston 448 moves the third hydraulic piston 448 axially, thereby deflecting the spring 444. The third hydraulic piston 448 forces the clutch plates 434 and discs 436 of the two/four shift clutch assembly 308 together against the reaction plate 445 and produces a frictional force between them. Because the two/four clutch plates 434 do not rotate or are stationary, as they are connected to the transmission case 102, the frictional force holds the two/four clutch discs 436 stationary, in turn, holding the flange 442, reverse hub member 374 and first sun gear 506 stationary. When the hydraulic fluid to the two/four shift clutch assembly 308 or third hydraulic piston 448 is vented, the deflected spring 444 applies a force to the third hydraulic piston 448, thereby returning the third hydraulic piston 448 to its non-applied position as shown in the figure.

To apply the low/reverse clutch assembly 310, hydraulic pressure from fluid entering between the fourth hydraulic piston housing 476 and the fourth hydraulic piston 474 moves the fourth hydraulic piston 474 axially, thereby deflecting the spring 490. The fourth hydraulic piston 474 forces the clutch plates 466 and discs 468 of the low/reverse clutch assembly 310 together against reaction plate 445 and produces a frictional force between them. Because the low/reverse clutch plates 466 are stationary, as they are connected to the transmission case 102, the frictional force holds the low/reverse clutch discs 468 stationary, in turn, holding the second annulus gear 542 and first planet carrier 508 stationary. When the hydraulic fluid to the low/reverse clutch assembly 474 or fourth hydraulic piston 474 is vented, the deflected spring 490 applies a force to the fourth hydraulic piston 474, thereby returning the fourth hydraulic piston 474 to its non-applied position as shown in the figure.

### OPERATION OF PLANETARY GEARS

In the neutral N or park P modes of transmission operation, the input shaft 176 (which is attached to the turbine assembly 128) freely rotates with the engine crankshaft 114. Since the input clutch retainer hub 312 is also attached to the input shaft 176, the input clutch retainer hub 312 rotates, in turn, causing the input clutch retainer 326 and clutch plates 342, 354 and 370 to freely rotate with the engine crankshaft 114.

When the transmission 100 is desired to operate in first gear, the underdrive clutch assembly 302 and low/reverse clutch assembly 310 are applied. Hydraulic fluid moves the second hydraulic piston 410 axially away from the torque converter 110 to engage the clutch plates 342 and friction discs 344 of the underdrive clutch assembly 302. This engagement causes the underdrive clutch hub 350 to rotate which, in turn, rotates the gear shaft 352. Because the second sun gear 520 is splined at 522 to the gear shaft 352, rotation of the gear shaft 352 causes the second sun gear 520 to rotate. As the low/reverse clutch assembly 310 is applied by the engagement of the low/reverse clutch plates 466 with the discs 468, the second annulus gear 542 is held stationary. Since the second annulus gear 542 is connected to the first planet carrier 508, the first planet carrier 508 is held stationary. As a result, rotation of the second sun gear 520 causes rotation of the second pinion gears 528 and the second planet carrier 524. Because the output gear 534 is splined at 532 to the second planet carrier 524, rotation of the second planet carrier 524 causes the output gear 534 to rotate. Since the second planet carrier 524 rotates, the first annulus gear 519 also rotates, causing the first pinion gears 510 and first sun gear 506 to freely rotate in first gear. The output gear 534 then transfers the torque from the second planetary carrier 524 to the transfer gear (not shown).

When the transmission 100 is desired to operate in second gear, the underdrive clutch assembly 302 and the two/four shift clutch assembly 308 are applied. Once again, the underdrive clutch hub 350 rotates as described above which, in turn, rotates the gear shaft 352. Rotation of gear shaft 352 causes the second sun gear 520 to rotate. As the two/four shift clutch assembly 308 is applied by engagement of the two/four shift clutch plates 434 with the discs 436, the flange 442, reverse clutch hub 374 and first sun gear 506 are held stationary. Because the transmission 100 has been operating in first gear, the first annulus gear 519 and second planet carrier 524 have been rotating at output speed. Also, the first sun gear 506 has been rotating freely. By holding the first sun gear 506 stationary, the first pinion gears 510 and first planet carrier 508 increase in speed. As a result, the first annulus gear 519, second planet carrier 524 and the output gear 534 rotate at a greater r.p.m. than first gear.

When the transmission 100 is desired to operate in third gear, the underdrive clutch assembly 302 and the overdrive clutch assembly 304 are applied. Once again, engagement of the underdrive clutch assembly 302 causes the second sun gear 520 to rotate as previously described. As the overdrive clutch assembly 304 is applied by engagement of the clutch plates 354 and discs 356 of the overdrive clutch assembly 304, the overdrive clutch hub 358 rotates, in turn, rotating the first planet carrier 508 due to the spline connection at 516. Since the first planet carrier 508 rotates, the first pinion gears 510, first sun gear 506 and second annulus gear 542 also rotate. As a result, the second pinion gears 526 of the second planet carrier 524 rotate, causing the second planet carrier 524 to rotate which, in turn, rotates the output gear 534 at input speed or a higher r.p.m. than second gear.

When the transmission 100 is desired to operate in fourth gear, the overdrive clutch assembly 304 and two/four shift clutch assembly 308 are applied. Application of the overdrive clutch assembly 304 causes the overdrive clutch hub 358 to rotate, as previously described. Rotation of the overdrive clutch hub 358 causes the first planet carrier 508 and second annulus gear 542 to rotate. Application of the two/four shift clutch assembly 308 causes the flange 442, reverse clutch hub 374 and first sun gear 506 to be held stationary as previously described. As a result, rotation of the first planet carrier 508 causes the first pinion gears 510, first annulus gear 519 and second annulus gear 542 to rotate. Rotation of the first and second annulus gears 519 and 542, respectively, causes the second pinion gears 526 and second planet carrier 524 to rotate which, in turn, rotates the output gear 534 at a greater r.p.m. than third gear.

When the transmission 100 is desired to operate in reverse gear, the reverse clutch assembly 306 and low/reverse clutch assembly 310 are applied. The reverse clutch assembly 306 is applied by engagement of the reverse clutch plate 370 and discs 372. This engagement causes the reverse clutch hub 374 to rotate which, in turn, rotates the first sun gear 506. Application of the low/reverse clutch assembly 310 causes the first planet carrier 508 and the second annulus gear 542 to be held stationary as previously described. As a result, the first sun gear 506 rotates the first pinion gears 510 which, in turn, rotate the first annulus gear 519 backwards. Rotation of the first annulus gear 519 causes the second planet carrier 524 and second pinion gears 526 to rotate which, in turn, causes rotation of the output gear 534 in a direction opposite to the other gear positions. Rotation of the second pinion gears 526 also causes the second sun gear 520 to rotate freely.

### CLUTCH REACTION AND APPLY PLATES

Referring to Figure 1C, the reaction plate 380 and pressure plate member 408 are shown. The present invention features web means such as an annular web 380a spaced radially at the outer periphery of the reaction plate 380 and connected to the reaction plate 380 at least one location circumferentially, and an annular web 408a spaced radially at the outer periphery of the pressure plate member 408 and connected to the pressure plate member 408 at least one location circumferentially. The webs 380a and 408a are an efficient means of increasing axial rigidity to restrict clutch deflection. The reaction plate 380 and pressure plate member 408 resist loads producing a stress pattern like that found in a Belleville spring (i.e. producing a family of moments along the radial direction).

Clutch apply cavities 618, 620, 622, 624 and 626 are also identified in Figures 1B and 1C and 1D.

The hydraulic system 600 also includes an underdrive element or clutch solenoid-actuated valve 630, overdrive clutch solenoid-actuated valve 632, two/four shift clutch solenoid-actuated valve 634 and low/reverse clutch solenoid-actuated valve 636 which are shown in Fig. 1D. The solenoid-actuated valves 630, 632, 634 and 636 control the fluid flow to their respective clutch apply cavities 618, 620, 624 and 626.

## Claims

1. A vehicle transmission assembly having four forward speeds and one reverse speed, comprising:
a transmission housing (102);
a rotatable input member (176);
an output member (104);
a gear assembly for changing the ratio of torque between said input member and said output member;
said gear assembly comprising a first planetary gearset (502)and a second planetary gearset (504) axially spaced from said first planetary gearset;
said first planetary gearset comprising a first sun gear (506), a first annulus gear (519) and a first planet carrier (508) having a plurality of circumferentially spaced first pinion gears (510) disposed between said first sun gear and said first annulus gear;
said second planetary gearset comprising a second sun gear (520), a second annulus gear (542) and a second planet carrier (524) having a plurality of circumferentially spaced second pinion gears (526) disposed between said second sun gear and said second annulus gear;
said first annulus gear (519) and said second planet carrier (524) being connected together;
said first planet carrier (508) and said second annulus gear (542) being connected together;
wherein a first clutch assembly (302) selectively couples said input member (176) to said second sun gear (520), a second clutch assembly (304) selectively couples said input member (176) to said first planet carrier (508), a third clutch assembly (306) selectively couples said input member to said first sun gear (506), a first brake assembly (308) selectively couples said first sun gear (506) to said transmission housing (102), and a second brake assembly (310) selectively couples said first planet carrier (508) and said second annulus gear (542) to said transmission housing (102); and
an output member (534) connected to said planet carrier (524) to rotate at the same time, characterized by not more than the said three clutch assemblies (302, 304, 306) to selectively couple said rotatable input member (176) to predetermined gears of said gear assembly (502, 504) and not more than the said two brake assemblies (308, 310) to selectively couple predetermined gears of said gear assembly to the transmission housing (102);
a first piston member (386) being movable axially from a non-applied position in one direction to apply said second clutch assembly (304) and movable axially in an opposite direction to apply said third adjacent clutch assembly (306) and a second piston member (410) being movable axially from a non-applied position in one direction to apply said first clutch assembly (302).

2. The assembly of claim 1, characterized by a flange member (540) interconnected said first annulus gear (519) and said second planet carrier (524).

3. The assembly of claim 1 or 2, characterized by a flange member (518) interconnecting said first planet carrier (508) and said second annulus gear (542).

## Patentansprüche

1. Fahrzeuggetriebe-Anordnung mit mindestens vier Vorwärtsgängen und mindestens einem Rückwärtsgang, die aufweist:
ein Getriebegehäuse (102);
ein drehbares Eingangsteil (176);
ein Ausgangsteil (104);
ein Zahnradgetriebe zum Ändern des Drehmomentverhältnisses zwischen dem Eingangs- und Ausgangsteil, wobei das Zahnradgetriebe einen ersten Planetenradsatz (502) und einen zweiten vom ersten axial beabstandeten Planetenradsatz (504) aufweist;
der erste Planetenradsatz ein erstes Zentralrad (506), ein erstes Ringrad (519) und einen ersten Planetenradträger (508) mit mehreren am Umfang beabstandeten ersten Planetenrädern (510) aufweist, die zwischen dem ersten Zentralrad und dem ersten Ringrad angeordnet sind;
der zweite Planetenradsatz ein zweites Zentralrad (520), ein zweites Ringrad (542) und einen zweiten Planetenradträger (524) mit mehreren am Umfang beabstandeten zweiten Planetenrädern (526) aufweist, die zwischen dem zweiten Zentralrad und dem zweiten Ringrad angeordnet sind;
das erste Ringrad (519) und der zweite Planetenradträger (524) miteinander verbunden sind;
der erste Planetenradträger (508) und das zweite Ringrad (542) miteinander verbunden sind;
wobei eine erste Kupplungsanordnung (302) nach Wahl das Eingangsteil (126) mit dem zweiten Zentralrad (520) kuppelt, eine zweite Kupplungsanordnung (304) nach Wahl das Eingangsteil (176) mit dem ersten Planetenradträger (508) kuppelt, eine dritte Kupplungsanordnung (306) nach Wahl das Eingangsteil mit dem ersten Zentralrad (506) kuppelt, eine erste Bremsanordnung (308) nach Wahl das erste Zentralrad (506) mit dem Getriebegehäuse (102) kuppelt, und eine zweite Bremsanordnung (310) nach Wahl den ersten Planetenradträger (508) und das zweite Ringrad (542) mit dem Getriebegehäuse (102) kuppelt; und
ein Ausgangsteil (534) mit dem Planetenradträger (524) für eine gleichzeitige Drehung verbunden ist, gekennzeichnet durch nicht mehr als die genannten drei Kupplungsanordnungen (302, 304, 306), um nach Wahl das drehbare Eingangsteil (176) mit vorbestimmten Rädern des Zahnradgetriebes (502, 504) zu kuppeln und mit nicht mehr als den beiden genannten Bremsanordnungen (308, 310), um nach Wahl vorbestimmte Zahnräder des Zahnradgetriebes mit dem Getriebegehäuse (102) zu kuppeln;
durch ein erstes Kolbenbauteil (386), das aus einer Lösestellung axial in einer Richtung zur Betätigung der zweiten Kupplungsanordnung (304) und in Gegenrichtung axial zur Betätigung der dritten benachbarten Kupplungsanordnung (306) bewegbar ist, und durch ein zweites Kolbenbauteil (410), das axial aus einer Lösestellung in einer Richtung zur Betätigung der ersten Kupplungsanordnung (302) bewegbar ist.

2. Anordnung nach Anspruch 1, gekennzeichnet durch ein Flanschbauteil (540), das zwischen dem ersten Ringrad (519) und dem zweiten Planetenradträger (524) verbindend vorgesehen ist.

3. Anordnung nach Anspruch 1 oder 2, gekennzeichnet durch ein Flanschbauteil (518) zur Verbindung des ersten Planetenradträgers (508) mit dem zweiten Ringrad (542).

## Revendications

1. Ensemble de transmission de véhicule ayant au moins quatre vitesses avant et au moins une vitesse arrière, comprenant :
un boîtier de transmission (102);
un élément d'entrée tournant (176);
un élément de sortie (104);
un ensemble d'engrenages pour changer le rapport de couple entre ledit élément d'entrée et ledit élément de sortie; ledit ensemble d'engrenages comprenant un premier ensemble d'engrenages planétaires (502) et un deuxième ensemble d'engrenages planétaires(504) espacé axialement dudit premier ensemble d'engrenages planétaire;
ledit premier ensemble d'engrenages planétaires comprenant un premier pignon planétaire (506), une première couronne dentée (519) et un premier porte-satellite (508) présentant plusieurs premiers pignons (510) espacés circonférentiellement disposés entre ledit premier pignon planétaire et ladite première couronne dentée;
ledit deuxième ensemble d'engrenages planétaires comprenant un deuxième pignon planétaire (220), une deuxième couronne dentée (542) et un deuxième porte-satellite (524) présentant plusieurs deuxièmes pignons (526) espacés circonférentiellement disposés entre ledit deuxième pignon planétaire et ladite deuxième couronne dentée;
ladite première couronne dentée (519) et ledit deuxième porte-satellite (524) étant reliés;
ledit premier porte-satellite (508) et ladite deuxième couronne dentée (542) étant reliés;
dans lequel un premier ensemble d'embrayage (302) accouple sélectivement ledit élément d'entrée (176) audit deuxième pignon planétaire (520), un deuxième ensemble d'embrayage (304) accouple sélectivement ledit élément d'entrée (176) audit premier porte-satellite (508), un troisième ensemble d'embrayage (306) accouple sélectivement ledit élément d'entrée audit premier pignon planétaire (506), un premier ensemble de frein (308) accouple sélectivement ledit premier pignon planétaire (506) au boîtier de transmission (102), et un deuxième ensemble de frein (310) accouple sélectivement ledit premier porte-satellite (508) et ladite deuxième couronne dentée (542) audit boîtier de transmission (102); et
un élément de sortie (534) relié audit porte-satellite (524) pour tourner en même temps, caractérisé en ce que lesdits ensembles d embrayage sont au plus au nombre de trois (302, 304, 306) pour accoupler sélectivement ledit élément d'entrée tournant (176) à des engrenages prédéterminés dudit ensemble d'engrenages (502, 504) et que lesdits ensembles de frein sont au plus au nombre de deux (308, 310) pour accoupler sélectivement des engrenages prédéterminés dudit ensemble d engrenages audit boîtier de transmission (102);
un premier élément de piston (386) étant déplaçable axialement d'une position non appliquée dans une direction pour appliquer ledit deuxième ensemble d'embrayage (304) et est déplaçable axialement dans une direction opposée pour appliquer ledit troisième ensemble d'embrayage adjacent (306), et un deuxième élément de piston (410) étant déplaçable axialement d'une position non appliquée dans une direction pour appliquer ledit premier ensemble d'embrayage (302).

2. Ensemble selon la revendication 1, caractérisé par un élément de bride (540) reliant ladite première couronne dentée (519) et ledit deuxième porte-satellite (524).

3. Ensemble selon la revendication 1 ou 2, caractérisé par un élément de bride (518) reliant ledit premier porte-satellite (508) et ladite deuxième couronne dentée (542).
